# EUROPEAN PATENT APPLICATION

(11) **EP 0 816 674 A1**
(43) Date of publication of application: **07.01.1998**
(21) Application number: 97304021.5
(22) Date of filing: 10.06.1997
(51) Int. Cl.: F02P 23/04

(54) **Ignition methods and apparatus using broadband laser energy**

(30) Priority: 24.06.1996 US 20652 P
(71) Applicant: SIMMONDS PRECISION ENGINE SYSTEMS, INC., Akron, Ohio 44334-0501 (US)
(72) Inventor: DeFreitas, Dennis M., Oxford, New York 13830 (US); Feeley, Terence J., Saunderstown, Rhode Island 02874 (US)
(74) Representative: Foster, David Martyn

(57) **Abstract**

An ignition apparatus for a combustor (10) includes a broadband laser energy source (30) that emits laser energy into the combustor (10), the broadband laser energy having at least two fundamental wavelengths, to produce a plasma that ignites a combustible mixture therein. In one embodiment, laser energy in the ultraviolet and infrared regions are emitted into the combustor (10). Intensity and time characteristics for the laser energy including fluence, pulse duration, repetition rate, peak intensity and average intensity can also be controlled for one or more of the fundamental wavelengths to further enhance the ignition and combustion processes.

## Description

### BACKGROUND OF THE INVENTION

This invention is related to the following co-pending and/or issued United States Patent applications: Serial No. 081,732, filed June 3, 1993, now U. S. Pat. No. 5,367,869, issued November 29, 1994, entitled "Laser Ignition Methods And Apparatus For Combustors" (1930022), and Serial No. 08/067,652, filed May 26, 1993, now U.S. Patent No. 5,515,681, issued May 19, 1996, entitled "Commonly Housed Electrostatic Fuel Atomizer And Igniter" (1930012), the entire disclosures of which are all fully incorporated herein by reference.

The invention relates generally to igniting combustible material in a combustor using laser energy. More particularly, the invention relates to ignition methods and apparatus for combustors using broadband laser energy and the tailoring of energy pulse characteristics to promote ignition.

A combustor is a fundamental assembly used to confine combustion of a fuel within an engine. For turbine engines, such as, for example, gas turbine aircraft engines, the combustor typically includes an open ended can or other annular casing that forms part or all of a combustion chamber for the fuel. A single engine may include a number of can combustors, or a single annular combustor, for example. Engines may also include combustors such as preburners and afterburners. Other engine types of interest include rotary engines, reciprocating engines such as, for example, automotive applications, rocket engines, ram jet engines and pulse jet engines.

Combustors require an igniter device to initiate the combustion process. Known igniters include plasma type spark plugs and glow plugs. More recently, laser energy, particularly infrared laser energy, has been incorporated into an igniter, as disclosed in the above-referenced U.S. Patents issued to DeFreitas. Known laser ignition systems, however, use single wavelength laser energy with single pulse characteristics.

The objectives exist, therefore, for improved, reliable and efficient apparatus and methods for initiating, sustaining and/or restarting combustion in a combustor using laser energy as the ignition energy source for the combustion process.

### SUMMARY OF THE INVENTION

The present invention contemplates, in one embodiment, the use of laser energy in the form of broadband laser energy including a plurality of fundamental wavelengths to initiate, sustain and/or restart a combustion process.

The present invention also contemplates controlling laser energy pulse characteristics using N fundamental wavelengths (N=1 or more) for a combustion process.

These and other aspects and advantages of the present invention will be readily understood and appreciated by those skilled in the art from the following detailed description of the preferred embodiments with the best mode contemplated for practicing the invention in view of the accompanying drawings.

### BRIEF DESCRIPTION OF THE DRAWINGS

Fig. 1 is a simplified schematic diagram in partial section of a gas turbine engine combustor with the invention incorporated therein;
Fig. 2 is an alternative embodiment illustrating use of the invention with a flame injector;
Figs. 3A-3D illustrate different embodiments for implementing broadband laser energy igniters;
Figs. 4A-4C are representative graphs depicting in an exemplary manner some of the laser pulse characteristics in accordance with the invention;
Fig. 5 is a block diagram of an alternative embodiment of the invention; and
Fig. 6 is a block diagram of a Q-switched laser control system suitable for use with the present invention.

### DETAILED DESCRIPTION OF THE INVENTION

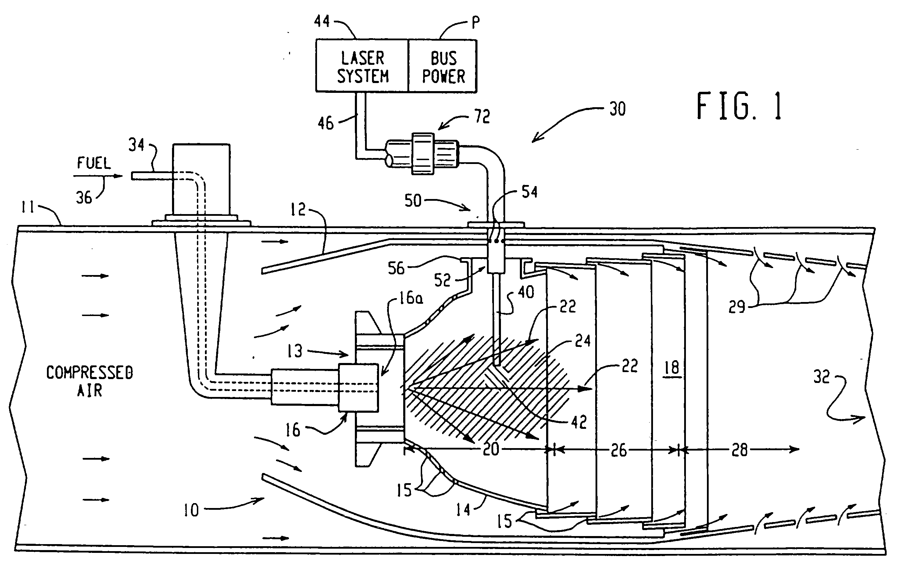

With reference to Fig. 1, an embodiment of the invention is illustrated in simplified schematic form for purposes of describing the basic concepts of the invention. In this basic configuration, a laser ignition apparatus 30 is provided for one or more combustors 10 as part of a gas turbine engine, such as may be used on an aircraft or for an industrial turbine to name just two examples. The general illustration in the various figures should not be construed in a limiting sense as to the physical location of the various elements. For example, all of the elements could be installed as part of the engine, or alternatively, for example, the laser source and related components could be located elsewhere on the aircraft or system.

It is also important to note that while the various embodiments of the invention as described herein are particularly directed to or explained in the context of use with gas turbine engines such as are commonly used for aircraft, such descriptions are intended to be exemplary in nature and should not be construed in a limiting sense. The invention is related to combustion initiation and restart processes, rather than being limited to specific engine or combustor designs or applications. Those skilled in the art will readily appreciate that the invention can be used with different types of combustors for many types of engines and applications other than in the aerospace and airborne gas turbine applications. For example, the present invention can be applied to combustors for reciprocating and rotary engines, rocket engines particularly liquid fuel rockets, ram jet and pulse jet, to name just a few examples. A few gas turbine engine applications of interest are: jet engines including preburners, afterburners for engines, turbojets, turboprops, turbofans, large gas turbine, medium gas turbines, small gas turbines, marine gas turbines, stationary and mobile industrial gas turbines. Other combustor systems of interest are: residential and industrial furnace applications, can combustors, can annular combustors, annular combustors and dual annular combustors to name a few. As noted, the invention is also applicable to reciprocating and rotary engine applications, such as, for example, automotive applications.

Thus, various embodiments are provided herein for applying the concepts and teachings of the invention to combustors that have a fixed geometry during a combustion cycle, such as a turbine can or annular combustor, and combustors that have a variable geometry during the combustion cycle. For example, a reciprocating engine cylinder in an automobile has a volume that changes with the piston stroke.

These examples of combustors and engines are not intended to be an exhaustive list, of course, nor are they to limit the scope and application of the invention.

Accordingly, the term "combustor" as used herein should be construed in its broadest sense to include any structure that defines or delimits a combustion chamber or region, such as the examples identified above, wherein fuel combustion is initiated and/or restarted. This includes the concept of a secondary or auxiliary combustor in the form of a cavity defined by a body or wall structure, such as can be used with a flame injector or as a plasma injector, for example, for initiating combustion in a second or main combustor. The invention, it should be noted, is especially useful with flow through combustors. Flow through combustors are generally understood as combustors in which the combustion process is continuous and characterized by an uninterrupted flow through velocity which may accelerate or decelerate due to gaseous expansion or contraction but generally is not interrupted by valves, throttle plates or similar devices. Flow through combustors are further characterized by relatively high volume air flow rates through orifices without throttling devices to produce a highly turbulent mixing of air and fuel for combustion.

A turbine engine typically includes an ignition control system which may include various electronic circuits for controlling when ignition is to start or to re-start. In a conventional spark plug igniter system, for example, an exciter provides a high energy discharge (usually capacitive or inductive) to a conventional spark plug which creates a spark or plasma that ignites an air/fuel mixture in the combustor.

The present invention, however, departs dramatically from the conventional spark plug or glow plug igniter (including the use of an exciter circuit), and replaces them with what can be generally referred to as an electromagnetic igniter or ignition system. By "electromagnetic igniter" is simply meant the application of electromagnetic energy in the form of laser energy to initiate combustion of an air/fuel mixture by the creation of a plasma either in the combustion chamber or a plasma that can be injected or delivered to the combustion chamber, or a plasma that can be exposed to a combustible mixture associated with or in the combustion chamber.

In a basic embodiment, broadband laser energy is introduced into a combustor or combustion chamber and used to ignite an air/fuel mixture therein. By the term 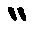 broadband*"* is meant that the laser energy emitted into the combustor has at least two fundamental wavelengths. The term 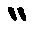 fundamental wavelength*"* generally refers to the concept that the laser energy has a peak intensity at a single wavelength (fₒ) and relatively low energy in a narrow sideband distribution, such as on the order of 50 nanometers, for example. It is contemplated, however, that there will be applications and operating conditions under which laser energy having a substantial number of fundamental wavelengths will be used. Such broadband laser energy may include a more even or flatter energy distribution across a large number of wavelengths. Known laser ignition systems heretofore have used only one fundamental wavelength for igniting an air/fuel mixture. The present invention contemplates the use of a number of different wavelengths in order to better facilitate igniting the air/fuel mixture.

In one embodiment, laser energy in the ultraviolet region is used to precondition the fuel, for example, Jet A. Such kerosene based fuels used with gas turbine engines, for example, are highly absorptive in the ultraviolet region of the electromagnetic spectrum. In accordance with the invention, ultraviolet energy is directed into the combustion chamber to a desired location so as to be absorbed by the fuel. Because the ultraviolet energy is not by itself being used to ignite the air/fuel mixture, the power output of the ultraviolet laser source can be reduced compared to laser power required if the ultraviolet energy were being used alone to ignite the air/fuel mixture.

In this embodiment, a second fundamental wavelength of laser energy, such as in the infrared region, is emitted into the combustion chamber, preferably within the same focal volume or to the same focal point as the ultraviolet energy. In this example, infrared energy is selected because it is substantially not absorbed by typical fuels used with gas turbine engines, and can conveniently be used to produce a plasma that ignites the air/fuel mixture. Such a process is described in the above-referenced patents to DeFreitas. Generally, the plasma, also referred to as a laser spark, is produced as the result of a breakdown or ionization of the air in the proximate region of the fuel droplets. The fuel droplets focus the infrared laser energy to a spot with sufficient pwer density or fluence (watts cm⁻²) to initiate a plasma of sufficient temperature and duration to ignite the fuel. By using the ultraviolet energy to precondition the air/fuel mixture, the power requirement for the infrared laser source is less than would otherwise be required to produce a more intense plasma of sufficient duration to ignite the fuel.

In this embodiment of the invention, the infrared laser energy is emitted into the combustor with the ultraviolet energy as a single packet or output of laser energy, however, it is not believed that this is a necessary operational requirement, but rather will be a design criteria based on each specific application. In some applications it may be useful to emit infrared laser energy immediately before and/or after the application of the ultraviolet energy. The invention contemplates the more general idea that it is the use of two or more fundamental wavelengths that enhances the ignition process, whether they are applied coincident with each other or overlap in time or are emitted at discrete times.

In another embodiment, laser energy having substantially more than two fundamental wavelengths is emitted into the combustion chamber to ignite an air/fuel mixture. The multiple wavelength laser energy can be produced in a number of ways as described hereinafter. The selection of the actual wavelengths used for a specific application will be based on the particular combustion requirements and the operating conditions of the combustor, including the type of fuel, fuel additives, operating pressures, mixture ratios and so forth.

In further accordance with the invention, broadband laser energy is produced in one embodiment by the use of separate narrowband laser sources for each fundamental wavelength emitted into the combustor. In an alternative embodiment, a broadband laser source is used to produce a plurality of fundamental wavelengths. Such a broadband Source can be excited, for example, by a single coherent light source such as a laser diode or diode array. It is contemplated that improvements in the production of broadband laser energy will continue to be developed and used in accordance with the present invention.

The use of broadband laser energy permits the selection of a number of wavelengths that can facilitate the ignition process. For example, laser ignition can be produced in at least three ways, i.e. photochemical, absorptive heating and multiphoton ionization (for example, a laser spark). The latter technique is one example of a laser ignition method that is useful in the embodiments described hereinafter, and is further described in the above-referenced U.S. Pat. No. 5,367,869 to DeFreitas.

Photochemical ignition occurs when the resonant wavelength of the molecular structure is matched to the laser energy wavelength. Absorptive heating techniques such as found in U.S. Pat. No. 4,947,640 to Few et al., uses a precisely selected wavelength of laser energy that corresponds to one of the spectral absorption lines of the combustible mixture.

The present invention contemplates the use of these alternative techniques, not as an independent ignition energy source, but rather as available techniques for preconditioning the combustible mixture for an ignition process that uses at least two fundamental wavelengths of electromagnetic energy to initiate combustion.

In the present example, jet fuel is highly absorptive of ultraviolet energy, and therefore ultraviolet energy is used to precondition the fuel. In this sense, the ultraviolet energy serves in an analogous manner to a catalyst for assisting the ignition of an air/fuel mixture by a plasma produced, in this example, by infrared laser energy. The laser energy can be used in the nature of a catalyst to precondition the combustible mixture by utilizing selected wavelengths to chemically and/or thermally alter the mixture to enhance its volatility, thus lowering the needed energy level of the laser spark to ignite the mixture. In other situations, it may be desirable to emit laser energy containing a large number of wavelengths into the air/fuel mixture to promote various preconditioning events as a precursor to producing the spark discharge and ignition. The use of broadband laser energy having a large number of fundamental wavelengths distributed across a wide spectrum also makes the laser source useful in different systems without needing to change the laser source for a specific combustor or engine or fuel (e.g. natural gas, kerosene and so on).

Although the present embodiment contemplates ultraviolet energy as a preconditioning laser energy source, and infrared energy as the plasma source, this arises from the fact that the present embodiment is described for purposes of giving an example of igniting jet fuel such as Jet A. It is contemplated that different fuels may be used someday that exhibit exactly the opposite characteristics, for example, being highly absorptive to infrared and non-absorptive to ultraviolet. The present invention can accommodate these variations because of the broadband laser emissions.

In accordance with another aspect of the invention, laser energy is emitted into the combustor with intensity and time duration characteristics that can be tailored to a specific application. This energy pulse shaping can be realized using N number of fundamental wavelengths for N=1 or greater. As described hereinafter, such pulse shaping includes, for example, the use of an 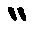 extended*"* output pulse of laser energy that exhibits an initially high intensity very short duration period of laser energy followed by a longer duration lower intensity period of the laser energy. The extended pulse and other exemplary pulse shaping characteristics disclosed herein can be applied to single fundamental wavelength electromagnetic igniters (N=1), such as described in the above-referenced patents to DeFreitas for example, as well as to broadband electromagnetic igniters (N>1) as described herein. The broadband laser igniter and pulse shaping aspects of the invention can be utilized separate from each other for applications in which only one aspect is needed for reliable ignition and combustion. It is contemplated, however, that the combination of pulse shaping and broadband laser energy can be utilized to produce a highly efficient and reliable ignition system in many applications.

For the exemplary two wavelength embodiment described hereinabove, the ultraviolet energy can be applied over a fairly long duration time period and lower average intensity to facilitate absorption and preconditioning of the fuel. The infrared laser energy can be applied first with a very high peak intensity over a very short duration time period to produce the initial plasma or laser spark, followed by a period during which the infrared energy exhibits a lower intensity longer duration time period to grow and stabilize the plasma, because a plasma is highly absorptive of infrared energy. This leads to the formation of a more intense, higher temperature and stable plasma for igniting the air/fuel mixture. It is desirable to form and grow a plasma that is sufficiently stable and intense to be present long enough to ignite nearby fuel droplets. The fuel droplets are moving at a velocity that is a function of the fuel nozzle and the air flow within the combustor. The plasma is also affected by the dynamic flow characteristics in the combustion chamber. Therefore, the laser energy is emitted in such a manner as to provide a stable plasma for a time period consistent with the resident time of the droplet to assure ignition of the fuel. The droplet resident time is a function of the droplet velocity.

The pulse or time and amplitude characteristics for the broadband laser energy can be tailored to the specific applications, including the peak amplitude, average amplitude, individual pulse durations and pulse repetition rates, both in the case where separate narrowband laser sources are used and the case where a broadband source is used. The present invention thus further contemplates the overall regime of applying broadband laser energy by tailoring the laser energy broadband wavelength and pulse characteristics to the ignition parameters of a combustor.

The tern "pulse" as used herein is intended to generally refer to producing a laser energy output that is directed into a combustor to ignite a combustible mixture. The laser energy output can be viewed as a single output packet of laser energy, a single pulse of laser energy or as a number of discrete or overlapping pulses depending on how the laser energy output is produced in a particular embodiment. The invention is more broadly directed to controlling characteristics such as wavelength, time duration, peak and average amplitudes, fluence and so on as described herein and thus is generally referenced to as "pulse" characteristics.

In accordance with another aspect of the invention, the plasma, such as a laser spark, can be produced in an optimum region of the combustor to facilitate ignition of the air/fuel mixture, as described in the above referenced patents to DeFreitas. Furthermore, an auxiliary or secondary combustor can be used to ignite a first combustible mixture, with the burning mixture then used to ignite a main air/fuel mixture, in the form of a flame injector as described in the above-referenced patents. The present invention is particularly useful with such designs because the broadband laser energy and pulse characteristics can be selected for optimum ignition, and in the case of an auxiliary combustor can be used as part of a torch type igniter that can be incorporated into different combustor and engine designs. The present invention can also be used as part of an igniter that is integrated with a fuel nozzle as described in the above-referenced patents.

It is important when reading the description herein to recognize that the terminology should not be construed so as to limit the scope or application of the invention. This has already been noted hereinabove with respect to the term "combustor". As further clarification, for convenience the term "combustor" herein will generally refer to any structure having a combustion region or chamber in which a combustible mixture, in the examples herein air and a fuel, is ignited by contact with or exposure to a laser generated plasma.

Furthermore, the term "plasma" is intended to broadly cover any high energy, high temperature region produced or formed in air or other medium such as by, for example, electrical breakdown or ionization or otherwise, and also refers to a flame or combustion of a combustible mixture, which plasma can be used as an ignition source for a second combustible mixture. A plasma, whether a spark type plasma or a plasma that is inherent to a combusting air/fuel mixture, can be displaced, beyond its point of initiation as with any plasma, such as by high velocity air movement, magnetic or electromagnetic plasma acceleration effects, to name just a few examples.

Having described the fundamental concepts of the invention, various exemplary embodiments thereof will now be described.

With reference to Fig. 1, a typical combustor 10, such as may be used with a turbine engine, includes within a fan casing or air plenum 11 an outer combustor liner 12 that encloses a combustor inner liner 14. For clarity and convenience, only one combustor is shown in Fig. 1. Other combustor designs, of course, could be used and include, for example, annular combustors which would typically have a plurality of fuel nozzles therein arranged in an annular somewhat doughnut-shaped configuration within the casing 12 (without the can design). The particular type of combustor used will depend on the engine design or combustion application. The invention is suitable for use with many different types of combustors, therefore, the description herein of a can combustor should not be construed in a limiting sense.

The combustor liner 14 is provided with a plurality of carefully designed air vents 15 that permit combustion air to enter the combustor and mix with fuel as is well known. Fuel is supplied by one or more fuel nozzle assemblies 16 installed through openings in the inner combustor liner 14. Typically associated with each fuel nozzle assembly 16 are additional air inlets 13 to create a high air flow and turbulence in the proximate area of the nozzle to facilitate air/fuel mixing and uniform combustion. Aerodynamic swirlers typically have also been incorporated in the liner 14 and/or the fuel nozzle 16 to further enhance this effect. In the embodiment of Fig. 1, each fuel nozzle assembly 16 may be any conventional nozzle such as a fuel pressure nozzle, air blast nozzle, hybrid or other type, and is usually specified by the engine manufacturer. Additionally, as disclosed in the above-referenced patents, an electrostatic fuel nozzle can be used either as a primary or secondary fuel source. The nozzle assembly 16 includes appropriate fittings that couple a fuel line 34 to the nozzle assembly in a known manner. The invention can be used with different fuels and fuel delivery systems, including liquid fuels (as exemplified in these embodiments), or natural gas to name just two examples.

The combustor inner liner 14 defines a combustion chamber 18 that includes three combustion zones, as is well known to those skilled in the art. The ignition or primary zone 20 is located just forward or downstream of the fuel nozzle outlet 16a. This primary zone is a region of high fuel concentration and high air flow, volume and turbulence. Fuel is preferably dispersed into the primary region as represented by the directional arrows 22 so as to provide an optimum area for combusting the fuel, as represented by the shaded region 24. The nozzle 16 preferably provides atomized fuel in the form of a small droplet spray. In accordance with an important aspect of the invention, a laser energy source, generally indicated with the numeral 30, is provided to initiate the main fuel supply ignition process, as will be explained shortly hereinafter.

Just downstream of the primary zone is an intermediate zone 26. In this zone, dilution air (represented by the arrows near the openings and vents 15) is provided to the combustor through the air vents 15. This air is used both to facilitate a homogenous combustion and also to cool the combustor liner 14. After the intermediate zone, the combustion by-products pass through a dilution zone 28 where further dilution air 29 is provided to cool the hot gases sufficiently before they pass through the combustor exit 32 to the turbine blades.

Each fuel nozzle 16 receives fuel from a nozzle fuel line 34 connected to a main fuel line 36. The fuel line 34 is coupled to the nozzle 16 by an appropriate fitting (not shown).

Mounted in the combustor 10 is the laser igniter assembly 30 which is used to produce a laser energy output 40 that is focused as at 42 to produce a plasma discharge (illustrated in an exemplary and exaggerated manner as a plasma ball at 42) preferably within the primary zone so as to ignite the fuel spray 24. The laser energy is emitted as broadband laser energy, broadband laser energy with selected pulse characterisitics as described hereinafter, or as single wavelength laser energy with selected pulse characteristics, as described hereinafter. The specific technique or combination of techniques including broadband and pulse characteristics will be selected based on the ignition and combustion requirements for each application.

The beam focusing is exaggerated in Fig. 1 for clarity and understanding. The laser igniter 30 includes a laser source system 44, which may be a conventional laser source powered by the main system power supply P. The laser energy is coupled into the combustor via an optic fiber or fiber bundle 46 with optional optical couplers 72 as needed. The igniter assembly includes a flange mounted coupler 50 (Fig. 1). The coupler 50 preferably includes a housing extension 52 that extends through the casing 12 into the combustor. The housing extension 52 may be provided with a plurality of air holes 54 for cooling and preventing combustion by-products from impinging on the optical elements (such as, for example, an optical window, lens and so forth), and may be attached to the combustor liner 14 by any convenient means through an opening 56 (which may conveniently be an existing spark plug opening with the spark plug removed for retrofit applications particularly; for new designs, laser energy can be emitted through an air passage in the combustor liner).

The embodiment of Fig. 1 is intended to be exemplary. The actual location of the optical elements for emitting laser energy into the combustor will depend on the operational parameters and characteristics of the combustor. Alternative designs are more fully described in the above identified patent and patent application hereinabove, and reference can be made to such disclosures for additional details. For example, the laser energy can be emitted via optical coupling through the main fuel nozzle 16, as through one or more of the nozzle orifices. The selected location for the focussed spot 42 of the laser energy can also be selected for optimum ignition of the air/fuel mixture. A feature of interest as to the placement of the optic fiber 46 is to permit the laser energy to be directed to the desired region to initiate combustion. In Fig. 1, this region is the primary zone 20, but in other applications it may be a different location in the combustion chamber. Besides the use of optic fibers, the laser energy can also be coupled using any number of conventional optic devices such as optic couplers, light rods, lenses and so on. Examples of such alternative structures for transmitting the laser energy into the combustor are set forth in the above-referenced patent no. 5,367,869.

Because in Fig. 1 the combustible mixture is delivered directly into the combustor 10, the plasma 42 created in the combustion chamber 18 can directly ignite the combustible mixture. However, each combustor 10 geometry will exhibit its own characteristic air/fuel flow dynamics and optimum ignition regions. Thus, to provide electromagnetic igniters for a number of different engine designs may require designing a corresponding number of laser energy sources and optical systems for each combustor of interest.

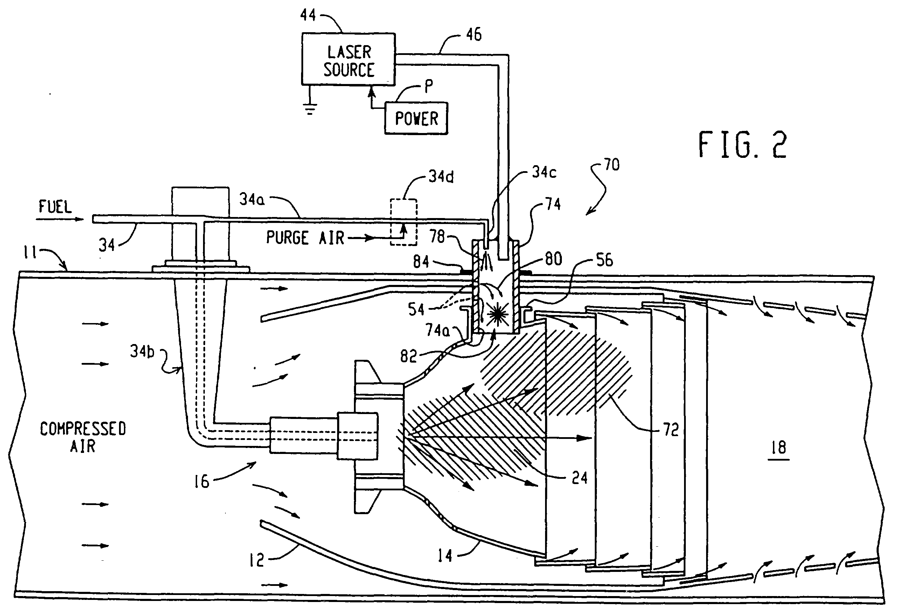

A particularly useful alternative embodiment is illustrated in Fig. 2. Again, this embodiment is described in greater detail in the reference disclosures, with the present invention being related to the incorporation of broadband laser energy and pulse characteristics to further enhance the ignition and combustion processes facilitated by the arrangement of Fig. 2.

In the embodiment of Fig. 2, an electromagnetic igniter 30 is also standardized by the use of an auxiliary or secondary combustor as an adjunct to the main combustor 10. The auxiliary combustor serves as a flame injector that can be used to ignite the main combustible mixture supply in the combustor 10. In this embodiment, the secondary combustor includes an inlet for air and a fuel, which for convenience can be (though it need not be) the same fuel as used in the main combustor 10, to create a combustible mixture.

With reference to Fig. 2, there is illustrated an embodiment of the laser igniter and flame injector concept. In this drawing, the details of the combustor 10 and various elements such as the fuel nozzle 16 are designated with the same reference numerals as used in Fig. 1, since these items can be the same as for the embodiment in Fig. 1, and a repeat description is not required.

In this embodiment, the flame injector is generally indicated with the numeral 70. The flame injector is used to produce a flame or plume of combusting fuel, represented by the shaded region 72, that is injected into the combustor 10 to ignite the main combustible mixture 24. Many advantages follow from this configuration including the fact that the ignition plasma for the main fuel spray does not have to be produced inside the combustor 10. Still further, because the injector 70 produces a flame of combusting fuel, the flame is stable and can be injected into the combustion chamber 18 to the optimum ignition region of the main combustible mixture 24, as represented in Fig. 2. The secondary combustor 70 provides a more stable and controllable region of air/fuel flow for igniting a combustible mixture as compared to igniting the main air/fuel supply 24.

The flame injector 70 includes a structural body or can 74 which for convenience can be a metallized cylindrical can, such as made of stainless steel or hastalloy or other suitable material such as ceramics, for example. The can 74 has a wall structure, in this example a cylindrical wall 74a, that defines a combustion region or chamber.

The optical fiber cable 46 is provided to couple the laser energy to the can 74. The optical fibers 46 can be coupled to the can 74 by any suitable means, so as to direct laser energy to an appropriate location for producing a plasma. An extension 34a of the fuel line 34 is used to deliver a small quantity of fuel to the injector 70. Fuel delivery to the injector 70 can conveniently be separately metered if so desired so that the ignition flame 72 is generated before the main fuel delivery through the fuel nozzle 16 is actuated. The fuel line 34a is connected in a conventional manner to a fuel nozzle or other atomising device 34c in this exemplary case of using a liquid fuel (which could simply be a restriction or orifice at the end of the fuel line) to produce a fuel spray 78 inside the can 74. Other air nozzle designs such as air blast, pressure blast, electrostatic and hybrids thereof can alternatively be used, for example. Air holes 54 are provided in the can to permit air from the plenum 11 to pass into the can, mix with the fuel spray 78 and also pass down through into the combustion chamber 18 as represented by the arrows 80.

When ignition is to commence, fuel is delivered to the combustor can 74 and mixes with the air 80 to form a combustible mixture in the can. The air is also used to cool the walls of the can. Laser energy is supplied from the source 44 down the optical wave guide 46 and is emitted into the can 74. The laser energy creates a plasma 82 in free space in the gas (e.g. air) in the can 74. In a manner similar to the embodiment of Fig. 1, the plasma 82 is produced downstream of the air/fuel mixture in the can 74 and preferably in a non-contact relationship with the can 74 wall structure, if possible. This plasma 82 ignites the combustible mixture in the combustor can 74 to produce the flame or plasma 72. The air pressure, fuel pressure and thermal gradients force the flame 72 out of the injector 70 and into the combustion chamber 18 into contact with the main combustible mixture 24 to ignite the same. Note that the can 74 can be small enough to fit axially into a preexisting spark plug hole 56. The can 74 can be mounted to the fan casing 11 or other suitable support such as by welding 84, a threaded engagement or other suitable mechanism.

Although in the embodiment of Fig. 2 the flame injector 70 is shown disposed in the existing spark plug hole 56 generally transverse the main fuel nozzle 16, this is merely for convenience and description and not a requirement. The flame injector could be positioned elsewhere at an opening to the combustor 10, such as for example adjacent the nozzle 16. Such an arrangement would be particularly useful with an annular combustor. An annular combustor is somewhat toroidal in shape, but typically has a number of fuel nozzles disposed about its circumference. By placing a flame injector 70 as illustrated in Fig. 2 adjacent each or equally spaced between some of the nozzles, ignition can be initiated. If so desired, the primary orifices (not shown) of the main nozzles can be omitted since the flame injector 70 provides the ignition flame, thus simplifying the nozzle design. Other combinations of nozzles and flame injectors will be apparent to those skilled in the art based on these examples.

The flame injector or torch 70 can be operated in a continuous manner (CW) or pulsed. In the CW mode, the flame injector 70 produces the combusting mixture 72 for as long as the fuel is supplied via the orifice 34c. In the case of pulsed operation, the fuel source 34c is modified to include a three-way valve 34d (preferably electronic). For clarity, this valve is shown in phantom in Fig. 2. Suitable three-way valves are commercially available from Automotive Switch Co. (ASCO) or McMaster CARR Co. The three-way valve supplies fuel to the injector 70 while it is operating and purges the torch with air when it is not. The purge function could be omitted if the fuel nozzle and liner of the torch were cooled to prevent fuel coking and fuel line/nozzle blockage. The flame injector is ignited by applying the laser energy after fuel is present in the can 74. The combusting fuel pressurizes the torch 70 such that the mixture is propelled into the main fuel stream to ignite it. Once the torch is lit, the fuel valve is positioned to allow air to purge the system clean. Torch operation stops once the fuel in the line is exhausted. The rate at which this torch (or additional torches if desired for a particular combustor application) operates is dependent on the combustor design and can function in a flow through gas turbine combustor or in a reciprocating engine or rotary engine. It is very useful for large industrial reciprocating engines since piston cylinder diameters can typically range from six inches to eighteen inches in diameter, for example. The need for uniform combustion initiating in these large cylinders is crucial to engine performance including horsepower and emission. This mode of operation is also compatible with pulsejet or ramjet engine operations as well as hybrid engine and SCRAM jets.

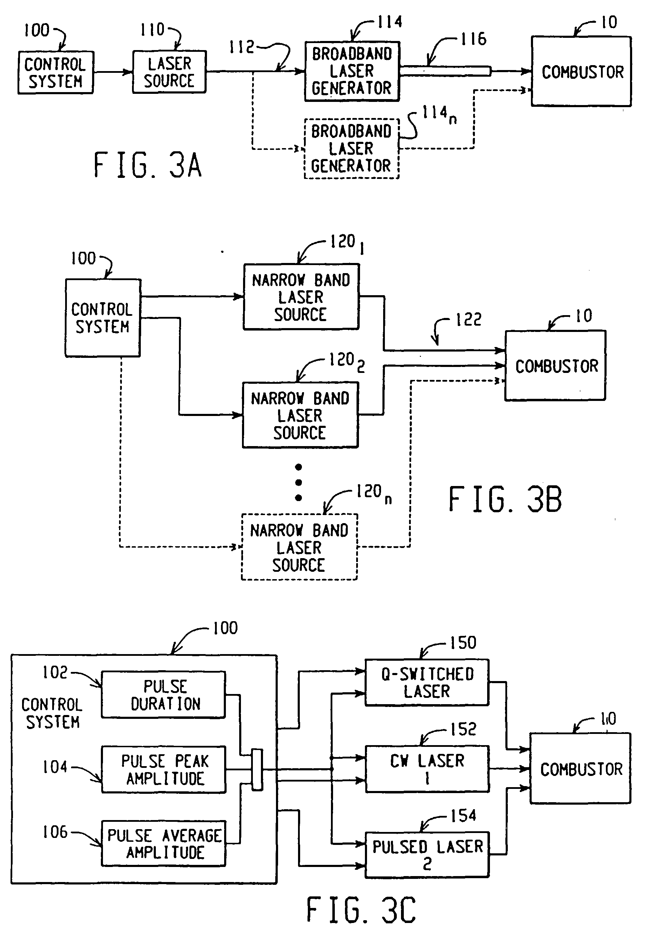

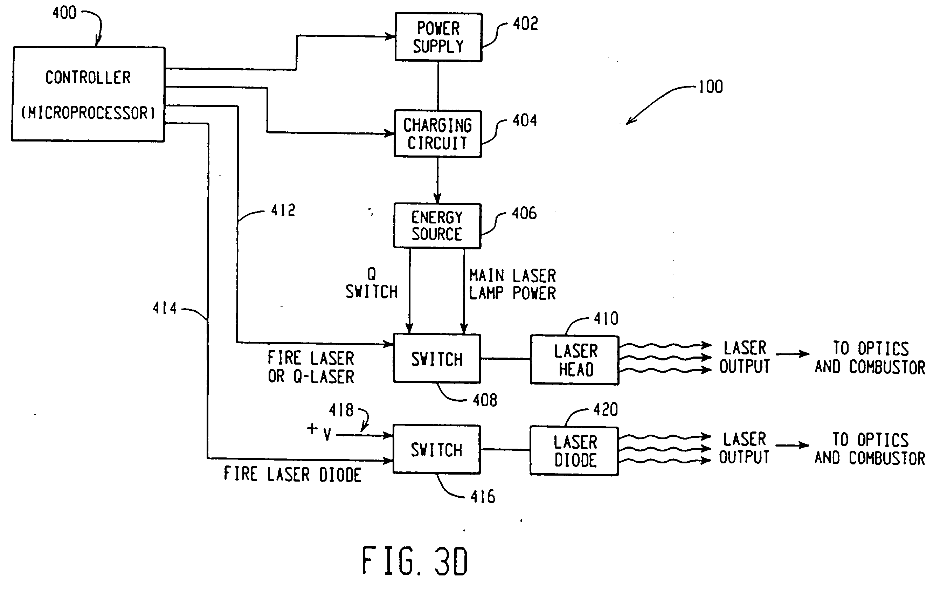

With reference next to Figs. 3A-3D, various embodiments for realizing the use of broadband laser energy with Figs. 1 and 2 are illustrated. In Fig. 3A, a control system 100 is provided which may conveniently be integrated with an overall engine control system, or designed as a stand alone unit or an add-on to the main control system. The control system is described herein in greater detail with reference to Fig. 3D. As shown in Fig. 3C (and as applicable to Figs. 3A-3D), the control system 100 is used to control different aspects of the laser sources, including pulse duration 102 which may include pulse repetition rate, pulse peak amplitude 104 and pulse average amplitude 106.

In Fig. 3A, a laser energy source 110 is activated by the control system 100. In this embodiment, the laser source 110 can be realized in the form of a laser diode. The laser diode 110 is optically coupled via optic coupler 112, such as an optic fiber, for example, to a broadband laser generator 114. The output laser energy from the broadband generator 114 is directed or emitted into the combustor 10 via a second optic coupler 116 if needed, such as an optic fiber arrangement as described hereinbefore. Additional broadband generators 114ₙ can be incorporated as required, as indicated by the phantom representation in Fig. 3A.

The electromagnetic igniter of the present invention uses laser energy produced by the laser energy source 110. For all of the embodiments described herein, the laser sources will be selected based on the particular wavelength and power requirements needed for each application. Many suitable laser sources are readily available including active Q-switched lasers, passive Q-switched lasers, diode pumped and flashlamp pumped lasers, crystal lasers, and various combinations of these types, to name a few examples. The laser source launches collimated laser energy into the optic fibers 112. Thus, the laser source 110 can be remotely disposed away from the igniter without significant loss of laser energy. The preferred laser systems of choice are; straight laser diode system or a laser diode pumped crystal/glass rod laser system. An exemplary laser element is a laser diode operating in the infrared range such as model no. OPC-AOxx-yyy-CS available from OPTO Power Corporation (where "xx" represents the power in watts, and "yyy" represents the wavelength in nanometers). Any other conveniently available single laser diode or laser diode array technology can be utilized to generate the desired power and wavelength characteristics. A laser diode system typically consists of the control system 100, pulse power supply, laser diode array with heat sink, and a lensing system. This system utilizes the output of a multi laser diode array and a lensing system to produce a collimated laser beam. The control system fires the pulse power supply which energizes the laser diode array resulting in a pulsed laser beam. The control system sets the pulse length, repetition rate and monitors system performance to protect the laser diode array from adverse operating conditions, primarily over temperature conditions. The laser diode pumped crystal/glass rod laser system consists of a control system, pulse power supply, laser diode array, crystal/glass lazing medium (examples including YAP, doped YAG crystal, HO:YLF, and doped phosphate laser glass to name a few) and a lensing system. The multi laser diode array is pulsed such that photon energy packets are projected into the crystal/glass rod structure. These photon energy packets are timed such that the total stored energy in the crystal/glass rod adds until the rods lasing threshold is reached. At this point the rod lases and emits a laser beam pulse of greater intensity than any of the individual laser diode pulses. The lensing system and control systems operate basically to provide the same functions as in the straight laser diode system. In both instances the laser beam pulses from the source 110 are transmitted to the combustor via the broadband generator 114 and the optic fiber cable 116. The laser pulses preferably are approximately 1 picosecond to 100 milliseconds in duration, with a wave length of between 150 nanometers and 15,000 nanometers and a peak energy between .001 joules and 50 joules; but these values are intended to be exemplary in nature and the selected values will depend on combustor design parameters as well as the power output capability of the energy source. The selection of the laser diode determines the wavelength of laser emission.

A typical laser diode 110 produces substantially monochromatic laser energy, also referred to herein as a narrowband laser source. In other words, the laser energy is typically characterized by a single fundamental wavelength with rather narrow sidebands, most of the laser energy being in the fundamental wavelength. The broadband generator 114 converts this single fundamental laser wavelength into laser energy having two or more fundamental wavelengths. In one embodiment, the broadband generator 114 is realized in the form of a waveguide, such as an optic fiber, that exhibits harmonic effects on laser light as the light passes through it. It is noted at this time that although the embodiments described herein relate to broadband generators that function in response to laser energy input, it is contemplated that other broadband generators may be developed that produce multiple fundamental wavelength laser energy without a direct coherent light source input.

The broadband generator 114, as stated, can be realized in the form of a waveguide that exhibits harmonic effects. For example, treated fibers can double a 1064 nm laser line to produce visible (green) 532 nm laser light. A suitable method to produce guided wave second harmonic generation ("SHG" or frequency doubling) in coated multimode optical fibers is as follows. The fiber cores are coated with a highly nonlinear dye by the Langmuir/Blodgett method. This technique allows precise control over film thickness as is known. The SHG signal increases as a function of the film thickness. Such fibers can be custom produced commercially by such companies as Balzers or Optical Coating Laboratory. Such fibers will double a 1064 nm laser line to produce 532 nm laser light. Thus, such a fiber can be used to produce laser energy in the infrared and visible regions from a single laser diode input source. By using two such fibers, as represented by the phantom view of an additional broadband generator in Fig. 3A, the infrared and visible laser energy can be separately controlled as to pulse characteristics for emitting into the combustor 10. These are just two examples. Other wavelength spectra, such as ultraviolet and others can also be produced by such fibers if so desired.

Broadband conversion has been further demonstrated in glass optical fibers, *see* STIMULATED RAMAN SCATTERING SEEDED BY A FIBRE CONTINUUM, Selker et al., ELECTRONICS LETTERS, vol. 26, no. 6 (March 15, 1990). Such fiber lasers are essentially diode pumped fiber optics that produce coherent light when optically pumped by an appropriate source such as a laser diode that emits infrared energy). When optically pumped, broadband laser energy is produced, including wavelengths in the ultraviolet region. Focussing of the laser energy can be accomplished by heating an end of the fiber to form a rounded feature in the nature of a lens that focusses the laser energy to a desired spot in the combustor 10.

The production of multiple wavelength laser energy may be enhanced by using waveguides with thin layers of colloidal suspensions, such as 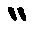 laser paint™*"* developed by Dr. Nabil Lawandy. Such broadband generators may be used to produce multiple wavelength laser energy that can be tailored to application specific ignition requirements in accordance with the present invention.

An alternative embodiment for utilizing more than one fundamental wavelength of laser energy for combustion is illustrated in Fig. 3B. In this embodiment, the control system 100 individually controls separate narrowband laser sources 120₁ and 120₂. Although only two narrowband sources 120 are shown in Fig. 3B, additional sources of n units can be used as needed for a specific application, as represented in phantom in Fig. 3B. In this embodiment, the first laser source 120₁ can be use for infrared laser energy and the second source 120₂ can be used for ultraviolet laser energy. The laser energy from both sources are combined and emitted into the combustor through a single optic fiber arrangement, an optic fiber bundle or separate respective optic fibers 122 as illustrated in Fig. 3B. Alternatively, the wavelengths can be combined at the output of an optical igniter (not shown) similar to the igniter described in U.S. Pat. No. 5,367,869, optically coupled to the fiber bundle 122. As a further alternative, in order to produce even more wavelengths in the broadband laser energy, the laser energy produced by one or both of the narrowband sources 120 could be used to excite a single or respective broadband generator such as described with reference to Fig. 3A herein. Again, the actual spectral distribution of the broadband laser energy, whether comprising two fundamental wavelengths or many fundamental wavelengths, or a broad flat spectral distribution, can be tailored to the specific application requirements for ignition and combustion.

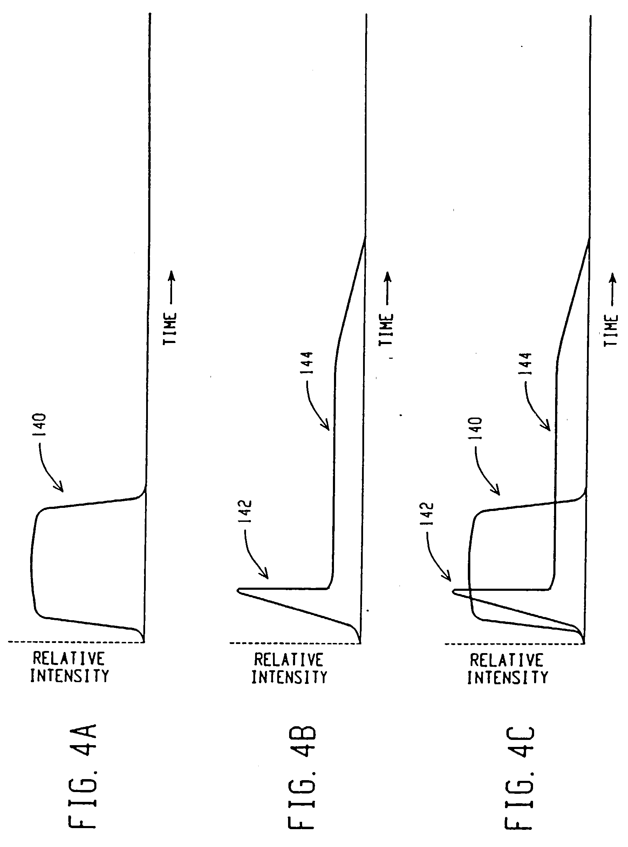

In accordance with another aspect of the invention, the broadband laser energy can be emitted into the combustor with selectable time duration and amplitude characteristics to optimize ignition and combustion performance. Figs. 4A-4C (for clarity relative times are exaggerated) illustrate in an exemplary manner a timing sequence for the embodiment described herein that uses ultraviolet and infrared laser energy as the broadband spectra. Since the ultraviolet energy is being used to precondition the fuel, it is produced as at 140 (Fig. 4A) at a relatively low constant fluence or power density (e.g. in the range of 1 x 10³ watts/cm² to 9.9 x 10⁷ watts/cm²) for a short time period, such as, for example, 5nsec to 50msec. It is contemplated that this ultraviolet energy pulse will be insufficient to ignite the air/fuel mixture, therefore, a lower power laser source can be used.

A relatively high amplitude very intense high energy infrared pulse period 142 (Fig. 4B) is applied coincident with or shortly after the onset of the ultraviolet pulse period 140. This very short duration high intensity infrared energy may be on the order of 1 picosecond to 100 nanoseconds, for example, and is used to produce an initial plasma or spark kernel. Typical fluence values are above 4 x 10⁹ watts/cm² to 1 x 10¹² watts/cm². We refer to this as "typical" fluence values because the actual energy required will depend on whether other energy sources are used with the laser energy, and the types of fuel, additives and so on, and the selected wavelengths. This laser energy packet can be lower in intensity and focussed to a lower fluence compared to a pulse used in a conventional system that does not provide for preconditioning pulses such as the ultraviolet pulse 140. Again, whether the laser energy output illustrated in Fig. 4C is viewed as a single output pulse or packet of laser energy, or as a number of discrete pulses of separate fundamental wavelengths, is not crucial to an understanding of the invention. The various wavelengths may all be produced, for example, by the same excitation source with the excitation source being controlled to emphasize specific wavelengths at any given point in time.

The high intensity infrared period is then followed as at 144 with a lower average intensity 1 x 10⁵ watts/cm² - 4 x 10⁹ watts/cm² longer duration infrared period to sustain and grow the plasma in order for the plasma to be present long enough and at a sufficient temperature and stability to ignite, for example, leaner air/fuel mixtures in the combustor 10. The longer duration or extended pulse period 144 may be on the order of 100 nanoseconds to 100 milliseconds, for example. In other examples, the infrared pulse 142 could be applied closer to the end of the ultraviolet pulse, or shortly thereafter if such an arrangement would be more suited to a particular application. Typically, it is expected that the energy density of the extended pulse period will be at least one order of magnitude less than the peak energy density of the high intensity pulse 142.

In all the exemplary embodiments described herein, it is important to keep in mind that the pulse durations and shapes and relative timing are intended to exemplify the basic concepts of the invention, with the actual laser energy pulses being tailored for optimum ignition performance for a specific application. The pulse characteristics can be more uniformly applied to different combustors 10, however, when used in conjunction with a secondary combustor arrangement such as was described herein with respect to Fig. 2.

Fig. 4C represents both the infrared and ultraviolet energies superimposed for further understanding of the principles applied in the present invention.

Fig. 3C illustrates a suitable embodiment for carrying out the pulse characteristics of the present invention. In this embodiment, a Q-switched laser 150 is used to produce the high intensity very short duration infrared pulse 142. The lower intensity infrared pulse 144 is produced using a CW laser source 152, and a second CW laser source 154 can be used to produce the ultraviolet energy pulse 140. As in Figs. 3A and 3B, the control system 100 can be configured to control peak intensity or amplitude, average intensity or amplitude and pulse duration characteristics for each pulse of laser energy. As an alternative, the Q-switched laser 150 and the CW laser 152 could be used to produce coherent electromagnetic energy that is used to excite a broadband laser generator as described herein with reference to Figs. 3A and 3B in order to provide a multiple wavelength laser energy igniter for the combustor 10.

Fig. 3D illustrates a suitable design in block diagram form of a control system circuit 100 used to control the electromagnetic ignition system. The control system 100 is preferably any conveniently available programmable type controller, digital control circuit, analog control circuit or other electronic system that produces appropriate control signals, for activating one or more laser sources and fuel sources, as described herein. The detailed electronic components useful with such a control system 100 are well known and need not be further described herein to understand and practice the present invention.

In this embodiment, the main controller 400 is realized in the form of a microprocessor which can be programmed in a conventional manner. A suitable device is a Motorola 68HC11, for example. The controller 400 regulates a main power supply 402 used to provide energy to a charging circuit 404. The charging circuit 404 provides charging current and voltage to an energy storage device 406, such as a capacitor for example. The stored energy is used to energize the various laser devices, and hence will be designed to deliver high peak and average power discharges over rather short time periods, often measured in microseconds. This also provides a circuit for controlling the peak and average laser energy output levels.

A switching device 408, such as one or more solid-state switches, is used to control when the energy stored in the storage device 406 is to be delivered to the laser head 410. This energy may be used, for example, to energize a flashlamp for a laser source. Alternatively, for example, the switch can be used to deliver energy used to excite a Q-switched laser module (reference herein to laser 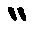 modules*"* is simply intended as a convenient shorthand reference to the use of laser sources that are commercially available as module packages). A signal is sent by the controller 400 on a control link 412 to trigger the switch 408 at the appropriate time for a selected duration and repetition rates. After the storage device is discharged, the switch 408 recovers to a blocking state and the device 406 can begin the next charging cycle.

In addition to controlling an active Q-switched laser and/or a passive Q-switched laser, or a conventional pumped laser, the controller 400 can send a control signal on a second link 414 to activate another switching device 416 which connects power (⁺V) 418 to a laser diode 420. The laser diode 420 output can be used directly in the combustor, and/or can be used to excite a broadband laser generator such as described with respect to Fig. 3A for example. The laser diode could be used, for example, to produce a lower power extended pulse following a high power Q-switched pulse, as described hereinafter.

The control circuit 100 can further include various feedback and control devices such as current sensors, voltage sensors, thermocouples and so on (not shown), coupled to the controller 400 using suitable I/O and A/D circuits, to control operation of the various laser elements.

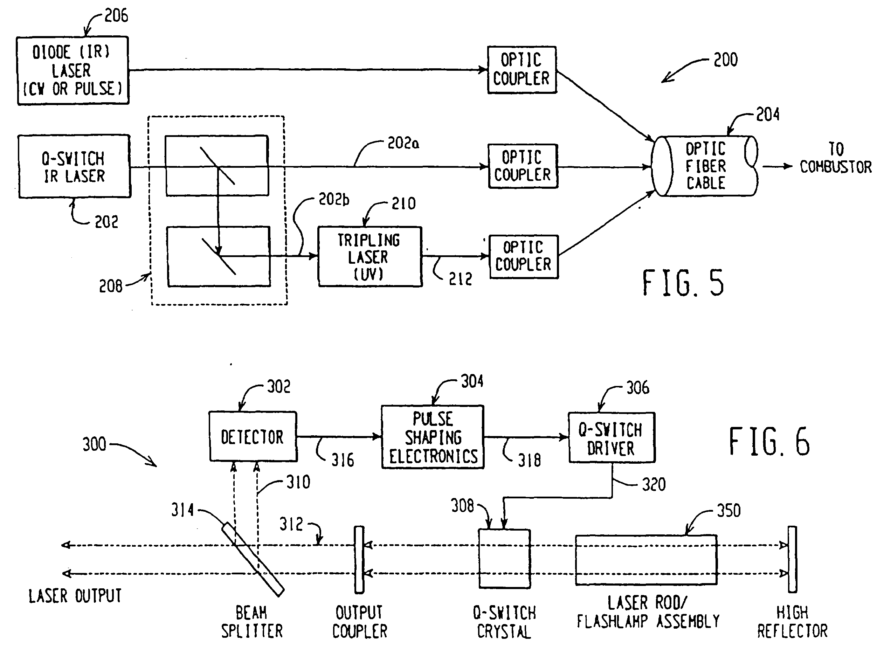

Fig. 5 illustrates another embodiment of the present invention that incorporates the pulse shaping and broadband concepts in an ignition system 200. In this example, a Q-switched laser energy source 202, such as for example that produces infrared laser energy, emits a high intensity very short duration IR pulse 202a that is delivered to a high power optic fiber cable 204 (or other suitable high power electromagnetic waveguide) such as Power-Core fiber available from 3M Company.

A CW or pulsed laser diode array or module 206 is used to produce the extended IR pulse 144 (1064 nm) at a lower amplitude or intensity as compared to the Q-switched pulse. A conventional beam splitter 208 is used to split a portion 202b of the Q-switched IR laser energy and direct it to a tripling crystal 210. The crystal 210 triples the laser energy frequency and thus outputs laser energy 212 in the ultraviolet region (e.g. 355 nm). The extended pulse IR energy from the IR source 206 and the ultraviolet energy 212 are coupled in a conventional manner to the optic bundle 204 for coupling to the combustion chamber. The percentage of laser energy split from the Q-switched output 202 will depend on the particular combustor parameters and ignition requirements. Suitable crystals 210 for tripling the IR frequency are available commercially from Union Carbide-Crystal Products in Washington state, and CSK Optronics in California. Other sources are readily identified in *The Photonics Buyers*' *Guide*, as is known to those skilled in the art. The example of Fig. 5 is not limited to frequency tripling. The IR laser energy could be doubled for example. The particular fundamental wavelengths, including the number N selected, will depend on the particular ignition requirements for each combustor. Other laser sources and crystal combinations, in addition to those described herein, will be apparent to those skilled in the art.

A single Q-switched laser could also be used to produce both the high peak pulse (such as 142 in Fig. 4B for example) and the extended pulse (such as 144 in Fig. 4B for example), as further described herein with respect to Fig. 6. The output of such a Q-switched system could then be split and a portion thereof input to the tripling crystal 210 illustrated in Fig. 5.

A suitable Q-switched laser system useful with the various embodiments of the present invention is illustrated in Fig. 6. Generally, this system 300 is based on a modification of a standard electro-optically Q-switched solid-state laser. In this case, a Q-switched crystal (typically lithium niobate), which preferentially transmits light along one axis of the crystal, is inserted in the cavity of the laser resonator. This crystal is aligned so that its optical axis is perpendicular to the internal polarization of the laser light. Application of an appropriate high voltage pulse to such an electro-optic crystal rotates the optical axis of the crystal, and thus the amount of light transmitted. By adjusting the high voltage pulse appropriately, the optical axis of the Q-switch is rotated by exactly 90 degrees (a quarter wave voltage pulse), minimizing the transmission of the Q-switch. In a typical Q-switched solid-state laser this quarter wave voltage pulse is delayed until well after the flashlamps are fired, maximizing the energy stored in the laser media. Rapid application of a quarter wave voltage pulse to the Q-switch thus allows this energy to be "dumped" in a short, intense "Q-switched" laser pulse.

In the embodiment of Fig. 6, the system 300 includes a conventional laser rod/flashlamp assembly 350 to produce laser energy, and further includes the combination of high speed detector 302, pulse shaping electronics 304 and a high speed Q-switch driver 306 to convert the function of the Q-switch 308 from a simple light shutter (on/off) to a variable light valve. This allows for more sensitive control of the laser output pulse shape. In this case, a high voltage pulse (near quarter wave) is also applied to the Q-switch crystal. A small amount 310 (typically <1%) of the laser output 312 is split off by a splitter 314 and monitored by the high speed energy detector 302, which creates a voltage output 316 proportional to the instantaneous pulse energy. This output is fed to the pulse shaping electronics 304 which generates an error signal 318 proportional to the difference between the observed laser energy and a preset level. This error signal is further processed and amplified so that once the preset energy level is exceeded a correcting voltage 320 is sent to the Q-switch driver, causing the plane of polarization of the Q-switch to be adjusted accordingly.

In the ideal case, this control scheme results in a "square wave" laser pulse which has a magnitude determined by the set point of the pulse shaping electronics and a maximum duration determined by the time required to deplete the energy stored in the laser media. In practice, however, it is often difficult to "throttle" the Q-switch 308 fast enough to generate this ideal behavior. This is particularly true for laser media with relatively short excited state lifetimes (e.g. Nd:Yag). In the typical case it is also difficult to avoid the generation of a short gain switched spike along the leading edge of the laser pulse (typically a few nanoseconds in duration). This spike is thus followed by a much longer (>100nsec) less intense pulse "tail." This 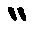 tail*"* or extended pulse can thus serve as the lower intensity extended pulse 144, for example, of the present invention. The embodiment of Fig. 6 then achieves the high intensity Q-switched laser pulse and the extended pulse with just a single laser source.

The invention thus provides an electromagnetic igniter for an ignition system associated with a combustor, which igniter utilizes broadband laser energy to ignite a combustible mixture therein. The invention also provides a combined broadband laser igniter and flame injector in which a secondary combustor provides a combustion chamber in which broadband laser energy is used to produce a plasma which ignites a combustible mixture in the injector to produce a flame or plasma that is injected (CW or pulsed) into a second combustor having a main combustible mixture therein to be ignited by the injected flame. The laser energy also is characterized by selectable pulse characteristics including pulse duration, peak amplitude, average amplitude and repetition rate for one or more of the fundamental wavelengths of the broadband laser energy to further optimize ignition and combustion. Due to the interaction effects of the various wavelengths and pulse characteristics of the applied laser energy, the individual and overall power requirements of the laser sources can be reduced compared to conventional systems that use single fundamental laser energy.

While the invention has been shown and described with respect to specific embodiments thereof, this is for the purpose of illustration rather than limitation, and other variations and modifications of the specific embodiments herein shown and described will be apparent to those skilled in the art within the intended spirit and scope of the invention as set forth in the appended claims.

## Claims

1. A method for igniting fuel in a combustor, the method comprising the steps of:
a. introducing fuel into the combustor; and
b. emitting laser energy of at least two fundamental wavelengths into the combustor to initiate combustion of the fuel.

2. The method of claim 1 wherein said at least two fundamental wavelengths are emitted contemporaneously into the combustor for a selected time period.

3. The method of claim 1 wherein a first fundamental wavelength preconditions the fuel prior to initiating combustion thereof, and a second fundamental wavelength initiates a plasma that ignites the fuel.

4. The method of claim 3 wherein said first fundamental wavelength is substantially absorbed by the fuel, and said second fundamental wavelength is substantially unabsorbed by the fuel.

5. The method of claim 1 wherein said laser energy is emitted into the combustor with a broadband spectral distribution having a plurality of fundamental wavelengths therein.

6. The method of claim 5 wherein said broadband laser energy is generated by a broadband laser energy emitter in response to a narrowband laser energy input.

7. The method of claim 5 wherein said broadband laser energy is generated by a corresponding plurality of narrowband laser energy sources, with each said narrowband laser energy source producing one of said fundamental wavelength of laser energy.

8. The method of claim 7 wherein each narrowband laser energy source produces pulsed laser energy with selectable pulse rate, amplitude and duration characteristics.

9. The method of claim 5 wherein said broadband laser energy is pulsed.

10. The method of claim 9 wherein each fundamental wavelength is pulsed with selectable pulse width, amplitude and duration characteristics.

11. The method of claim 5 wherein said broadband laser energy is generated by a broadband laser energy emitter in response to a narrowband laser energy input, said emitter being controlled to produced pulsed laser energy with selectable pulse rate, amplitude and duration for each said fundamental wavelength.

12. The method of claim 11 wherein said narrowband laser energy is input to a device which, in response to said input energy, emits laser energy at a different fundamental wavelength.

13. The method of claim 12 wherein the narrowband laser energy is used as input laser energy to a plurality of said devices for producing a plurality of different fundamental wavelengths.

14. The method of claim 12 wherein said input laser energy is used to excite a material in said device, which material emits laser energy at a fundamental wavelength that is different from the wavelength of the input laser energy.

15. The method of claim 14 wherein said material comprises a strongly scattering lasing medium.

16. Apparatus for igniting fuel in a combustor, the apparatus comprising: a fuel source for introducing fuel into the combustor; and a laser energy source for emitting laser energy of at least two fundamental wavelengths into the combustor to initiate combustion of the fuel.

17. The apparatus of claim 16 wherein said laser energy source comprises a narrowband laser energy source and a broadband laser enrgy emitter that produces at least two fundamental wavelengths of laser energy in response to laser energy from said narrowband laser energy source.

18. The apparatus of claim 17 wherein said laser energy emitter comprises a device having a strongly scattering lasing medium that emits laser energy at a fundamental wavelength that is different from said narrowband laser energy source fundamental wavelength.

19. The apparatus of claim 16 wherein said laser energy source comprises a comprises a plurality of narrowband laser energy sources, each said narrowband laser energy source producing a respective one of said fundamental wavelengths.

20. The apparatus of claim 16 wherein a first fundamental wavelength preconditions the fuel prior to initiating combustion thereof, and a second fundamental wavelength initiates a plasma that ignites the fuel.

21. The apparatus of claim 20 wherein said first fundamental wavelength is substantially absorbed by the fuel, and said second fundamental wavelength is substantially unabsorbed by the fuel.

22. The apparatus of claim 16 wherein said laser energy source emits laser energy into the combustor with a broadband spectral distribution having a plurality of fundamental wavelengths therein.

23. The apparatus of claim 16 wherein said laser energy source emits pulsed laser energy.

24. The apparatus of claim 23 further comprising control means for selecting pulse rate, amplitude and duration for said fundamental wavelengths.

25. The apparatus of claim 24 wherein said control means selects pulse rate, amplitude and duration and time period each said fundamental wavelength is emitted by said laser enrgy source.

26. The apparatus of claim 16 wherein said combustor is a flow through combustor in a gas turbine engine.

27. A laser igniter for igniting fuel in a combustor, the igniter comprising a broadband laser energy source for emitting at least two fundamental wavelengths of laser energy, and means for coupling said broadband laser energy into the combustor.

28. The igniter of claim 27 wherein said first fundamental wavelength is within the ultraviolet spectrum to precondition fuel in the combustor, and said second fundamental wavelength is within the infrared spectrum to initiate a plasma to ignite the fuel.

29. The laser igniter of claim 27 comprising a narrowband laser energy source and a broadband laser energy source, said narrowband laser energy source producing laser energy that is input to said broadband laser energy source which produces at least two fundamental wavelengths of laser energy in response thereto.

30. The laser igniter of claim 29 wherein said broadband laser energy source comprises a material that is excited by laser energy from said narrowband laser energy source and emits laser energy at a wavelength different from the wavelength of said narrowband laser energy source.

31. The laser igniter of claim 27 wherein said broadband laser energy source comprises a plurality of narrowband laser energy sources, each of said narrowband laser energy sources producing laser energy at a selected fundamental wavelength.

32. The laser igniter of claim 27 wherein said laser energy is pulsed, and further comprising control means for selecting pulse rate, amplitude, duration and time period for each fundamental wavelength emitted by said broadband laser energy source.

33. The apparatus of claim 16 wherein said laser energy source comprises a laser energy waveguide that exhibits laser wavelength harmonic effects in response to excitation by single fundamental wavelength laser energy.

34. The apparatus of claim 33 wherein said waveguide comprises coated mutimode optic fibers.

35. The apparatus of claim 33 wherein said single fundamental wavelength laser energy is produced by a laser diode.

36. A method for initiating combustion of fuel in a combustor, the method comprising the steps of:
a. providing an air/fuel mixture in the combustor;
b. emitting a high energy pulse of laser energy having a duration of t₁ into the combustor at a sufficient fluence to produce a plasma kernel; and
c. emitting a lower energy pulse of laser energy having a duration t₂ into the combustor wherein pulse shape characteristics of said lower energy pulse include a lower energy longer duration pulse compared to said first pulse and with the time duration t₂ extending from the time duration t₁, to initiate combustion of the air/fuel mixture.

37. The method of claim 36 wherein said high energy pulse has a fundamental wavelength that is different from a fundamental wavelength of said lower energy pulse.

38. The method of claim 37 wherein said high energy pulse comprises infrared energy and said lower energy pulse comprises ultraviolet energy.

39. The method of claim 36 wherein said lower energy pulse preconditions the air/fuel mixture so that said high energy pulse initiates combustion at a lower pulse energy level than would otherwise be required in the absence of said lower energy pulse.

40. The method of claim 36 wherein said time duration t₂ overlaps a portion of the time period t₁.
